Europäisches Patentamt

European Patent Office

Office européen des brevets

(11) Veröffentlichungsnummer: **0 463 308 A1**

(12) **EUROPÄISCHE PATENTANMELDUNG**

(21) Anmeldenummer: **91106089.5**

(22) Anmeldetag: **17.04.91**

(51) Int. Cl.5: **B60T 8/18**, F16J 15/56, F16J 15/24

(30) Priorität: **29.06.90 DE 4020671**

(43) Veröffentlichungstag der Anmeldung:
**02.01.92 Patentblatt 92/01**

(84) Benannte Vertragsstaaten:
**DE ES FR GB IT**

(71) Anmelder: **ALFRED TEVES GMBH**
**Guerickestrasse 7**
**W-6000 Frankfurt/Main 90(DE)**

(72) Erfinder: **Schonlau, Jürgen**
**Steingartenweg 9**
**W-6229 Walluf(DE)**

(54) **Kolbenabdichtung für druckmittelbetätigte Systeme.**

(57) Die Erfindung betrifft eine Kolbenabdichtung für druckmittelbetätigte Systeme, welche sich in einer ringförmigen Aussparung eines Kolbens (5) oder seines Gehäuses (4) befindet und auf einem abdichtenden Ringelement (1A,1B) sowie einem einseitig gegen die Richtung der Druckkraft (A) wirkenden elastischen Element (2,3) besteht. Dabei ist das elastische Element so dimensioniert, daß sich das abdichtende Ringelement (1) bei geringerem Druck gegen sein elastisches Element (2,3) bewegt als der Kolben (6) gegen die Kraft, die ihn im Anschlag hält, so daß sich zwischen Abdichtung und Wänden ein Druckmittelfilm bildet, der eine weitestgehend gleichmäßige Anfangsbewegung des Kolben gewährleistet.

FIG.1A

EP 0 463 308 A1

Die Erfindung betrifft eine Kolbenabdichtung für druckmittelbetätigte Systeme der aus dem Oberbegriff des Anspruches 1 hervorgehenden Gattung.

Es sind bisher Kolbenabdichtungen z.B. in Bremskraftreglern bekannt, die als Dichtringe unterschiedlichen Profils fest in einer ringförmigen Aussparung des Kolbens oder seines Gehäuses eingefaßt sind. Entsprechend dem Kolbenquerschnitt und der Kraft, die den Kolben gegen seinen Anschlag drückt, z.B. durch eine vorgespannte Feder, ist ein bestimmter Initialdruck notwendig, um den Kolben gegen diese Kraft zu bewegen. Besonders bei hohen Initialdruck geschieht es, daß sich der Dichtring elastisch verformt, bevor sich der Kolben in Bewegung setzt. Die bezüglich der Kolbenachse axiale Dicke des Dichtringes nimmt ab, während die radiale Dicke größer wird. Dadurch wird der Dichtring fest an die gegeneinander abzudichtenden Wände gedrückt und wenn der Initialdruck erreicht ist, hat der Kolben zunächst eine hohe Haftreibung zu überwinden, bevor er dem Druck nachgibt. Dies hat eine ruckartige, hysteresebehaftete Anfangsbewegung des Kolbens zur Folge (Stick-Slip-Effekt).

Es ist versucht worden, dies durch Reduzierung der Reibwerte und Optimierung der Dichtkante zu vermeiden. Diese Bemühungen waren aber nur wenig erfolgreich. Zudem ist eine präzise bearbeitete Dichtkante verschleißanfällig.

Die Aufgabe der vorliegenden Erfindung besteht nun darin, eine weitestgehend gleichmäßige Bewegung des Kolbens zu gewährleisten, mit Hilfe einer einfachen und verschleißfreien Anordnung.

Diese Aufgabe wird durch die in Anspruch 1 aufgeführten Merkmale gelöst. Wesentlich an der Erfindung ist, daß sich das ringförmige Abdichtelement gegen sein der Druckkraft entgegenwirkendes elastisches Element schon bei einem Druck bewegt, der geringer ist als der Initialdruck für die Kolbenbewegung. So bildet sich zwischen dem Abdichtelement und den gegeneinander abzudichtenden Wänden ein dünner Druckmittelfilm, so daß bei erreichtem Initialdruck der Kolben selbst nur noch eine viel kleinere Reibkraft als die Haftreibung der Abdichtung zu überwinden hat. Es reicht eine normale Dimensionierung von Kolben- und Gehäuseqerschnitt aus, um den Druck auf die Abdichtung wirken zu lassen, so daß keine zusätzlichen Veränderungen des Kolbens oder des Gehäuses notwendig sind. Zudem ist eine solche Abdichtvorrichtung verschleißfrei im Gegensatz zu einer exakten Dichtkante.

Die Erfindung läßt verschiedene Ausführungsformen zu. Die Kolbenabdichtung kann sich in einer ringförmigen Aussparung des Kolbens oder dessen Gehäuse befinden.

Als elastisches Element der Abdichtung bietet sich ein Federelement an. Dabei ist die Verwendung einer Tellerfeder oder einer Wellfeder vorteilhaft aufgrund ihrer geringen axialen Ausdehnung. Die Federkonstante ist entsprechend der Kolben-Rückstellkraft und dem Verhältnis der Angriffsflächen so zu wählen, daß sich das Abdichtelement gegen seine Druckfeder so kurze Zeit vor dem Kolben in Bewegung setzt, daß der Druckmittelfilm zwischen dem Abdichtelement und den Wänden noch besteht, wenn der Initialdruck erreicht ist. Dadurch wird ein ruckartiges Anfahren des Kolbens und damit eine Hysterese der Anfangsbewegung des Kolbens vermieden. Dieser Vorteil legt besonders die Verwendung als Abdichtung des Regelkolbens eines Bremskraftreglers nahe.

Das ringförmige Abdichtelement kann ein Dichtring mit zur Druckseite hin gebräuchlichem zweckentsprechendem Profil sein, dessen Rückseite so ausgeformt ist, daß sie einen guten Sitz des elastischen Elements gewährleistet.

Zwei der verschiedenen möglichen Ausführungsformen werden in den Abbildungen aufgeführt.

Es zeigt:

Fig. 1A    Kolbenabdichtung mit Tellerfedersäule in der Gehäusewand,

Fig. 1B    Tellerfeder in Seitenansicht,

Fig. 2A    Kolbenabdichtung mit Wellfeder im Kolben,

Fig. 2B    Wellfeder in Seitenansicht.

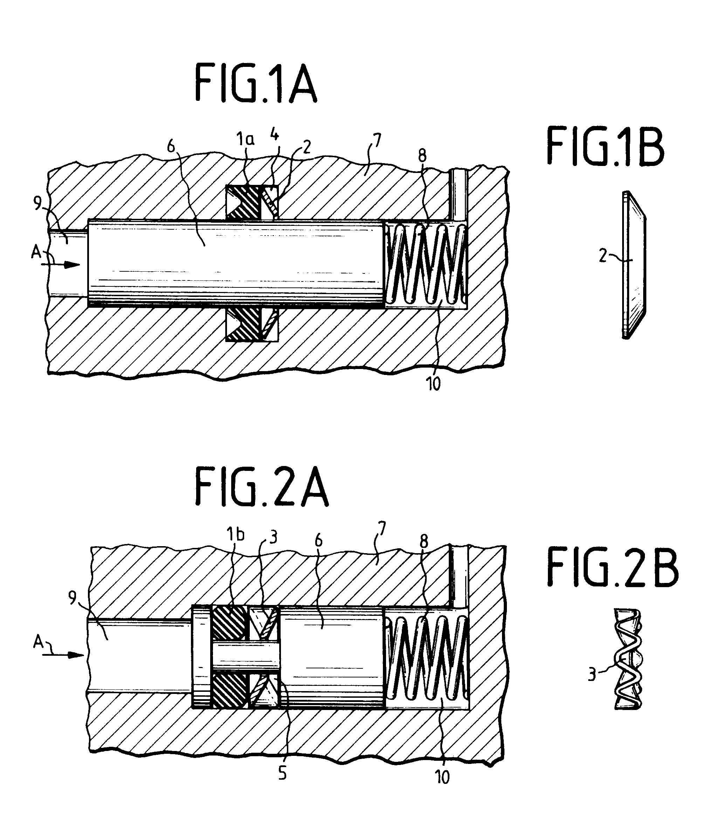

In Fig. 1A befindet sich die Kolbenabdichtung 1,2 in einer ringförmigen Aussparung 4 der Gehäusewand. Der Abdichtring 1 besitzt ein etwa V-förmiges Profil, und als elastisches Element dient eine Tellerfeder 2 (s. Fig. 1B). In Fig. 2A besitzt der Kolben 6 eine ringförmige Aussparung 5, in welcher sich die Abdichtung 1,3 befindet. Hier dient als elastisches Element der Abdichtung eine Wellfeder 3 (s. Fig. 2B).

Die Abbildungen zeigen die Kolbenanordnung in Anschlagstellung. Steigt aus Richtung A der Druck an, wird kurz vor Erreichen des Initialdrucks für die Kolbenbewegung der Dichtring 1 gegen seine Druckfeder 2 bzw. 3 nach rechts verschoben, so daß seine Kontaktflächen zum Kolben 6 und zur Gehäusewand mit einem dünnen Film des ihm umgebenden Druckmittels benetzt werden. Ist der Druck dann bis zum Initialdruck angestiegen, setzt sich der Kolben 6 gegen seine Druckfeder 8 in Bewegung.

Bezugzeichenliste

| | |
|---|---|
| 1 | Dichtung |
| 2 | Tellerfeder |
| 3 | Wellfeder |
| 4 | ringförmige Gehäuseaussparung |
| 5 | ringförmige Aussparung des Kolbens |

6    Kolben
7    Gehäuse
8    Druckfeder
A    Richtung der Druckkraft

## Patentansprüche

1. Kolbenabdichtung für druckmittelbetätigte Systeme, welche sich in einer ringförmigen Aussparung eines Kolbens (5) oder seines Gehäuses (4) befindet, dadurch **gekennzeichnet,** daß die Abdichtung ein abdichtendes Ringelement (1) und ein einseitig wirkendes elastisches Element (2,3) aufweist, welche dergestalt angeordnet sind, daß das elastische Element der Richtung (A) entgegenwirkt, aus welcher Druck aufgebaut wird, und daß das zur Abdichtung gehörende Element (2,3) bei geringerem Druck nachgibt, als der gegen das Gehäuse (7) abgedichtete Kolben (6).

2. Kolbenabdichtung nach Anspruch 1, dadurch **gekennzeichnet,** daß das elastische Element der Abdichtung aus einer Federanordnung besteht.

3. Kolbenabdichtung nach Anspruch 2, dadurch **gekennzeichnet,** daß die Federanordnung eine Tellerfeder (2) ist.

4. Kolbenabdichtung nach Anspruch 2, dadurch **gekennzeichnet,** daß die Federanordnung aus einer Wellfeder (3) besteht.

5. Kolbenabdichtung nach einem der Ansprüche 1 bis 4, dadurch **gekennzeichnet,** daß sie in Bremskraftreglern Verwendung findet.

EP 0 463 308 A1

# FIG.1A

# FIG.1B

# FIG.2A

# FIG.2B

4

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | US-A-3 712 684 (CORDIANO)<br>* Spalte 4, Zeile 25 - Spalte 5, Zeile 47; Figur 4 *<br>– – – | 1,2,5 | B 60 T 8/18<br>F 16 J 15/56<br>F 16 J 15/24 |
| A | US-A-3 717 293 (TRAUB ET AL.)<br>* Spalte 6, Zeile 43 - Spalte 6, Zeile 68; Figuren 5-8 *<br>– – – | 1,2 | |
| A | PATENT ABSTRACTS OF JAPAN vol. 4, no. 88 (M-17)(570) 24 Juni 1980,<br>& JP-A-55 47052 (ARAI SEISAKUSHO) 02 April 1980,<br>* das ganze Dokument *<br>– – – | 1,3 | |
| A | DE-A-3 441 752 (ALFRED TEVES)<br>– – – – – | | |

**RECHERCHIERTE SACHGEBIETE (Int. Cl.5)**

B 60 T
F 16 J

Der vorliegende Recherchenbericht wurde für alle Patentansprüche erstellt

| Recherchenort | Abschlußdatum der Recherche | Prüfer |
|---|---|---|
| Berlin | 07 Oktober 91 | THOMAS C L |